# EUROPEAN PATENT APPLICATION

(11) **EP 3 309 045 A1**
(43) Date of publication of application: **18.04.2018**
(21) Application number: 17195468.8
(22) Date of filing: 09.10.2017
(51) Int. Cl.: B62D 5/04, F16H 25/22

(54) **BALL SCREW DEVICE, METHOD OF MANUFACTURING BALL SCREW DEVICE, AND STEERING SYSTEM**

(30) Priority: 12.10.2016 JP 2016201111
(71) Applicant: JTEKT Corporation, Osaka-shi, Osaka 542-8502 (JP)
(72) Inventor: YAMAZAKI, Eiji, Osaka-shi, Osaka 542-8502 (JP); TSUKAGOSHI, Masayuki, Osaka-shi, Osaka 542-8502 (JP)
(74) Representative: Winter, Brandl, Fürniss, Hübner, Röss, Kaiser, Polte - Partnerschaft mbB

(57) **Abstract**

Provided are a low-cost ball screw device having a low-cost deflector, a method of manufacturing the ball screw device, and a steering system having the ball screw device, wherein the deflector is formable by simple machining, is easy to handle after being machined, and thus is easy to store and mount to another component. A ball screw device (40) includes a screw shaft (20), a nut (21), rolling elements (24), and deflectors (51, 52). Mounting holes (41, 42) each have a pair of circumferentially facing surfaces that face toward each other in the circumferential direction of the nut (21) and parallel to each other. When a plane passing through the center point (Q) of an opening (a first opening 53a) in one end of a second circulation path (53) in each of the pair of deflectors (51, 52) and the axis of the nut (21) is defined as a reference plane (α), an intersection line (at least one of γ1 and γ2) between an imaginary perpendicular plane β (a perpendicular plane) perpendicular to the axis and the pair of circumferentially facing surfaces has an angle with respect to the reference plane (α).

## Description

### BACKGROUND OF THE INVENTION

### 1. Field of the Invention

The invention relates to a ball screw device, a method of manufacturing the ball screw device, and a steering system having the ball screw device.

### 2. Description of Related Art

In some vehicle steering systems, such as that disclosed in Japanese Patent Application Publication No. 2015-132308 (JP 2015-132308 A), an electric motor provides a rack shaft with an axial thrust force to assist the rack shaft in operating. In the steering system disclosed in JP 2015-132308 A, a ball screw device converts the rotational force of the electric motor to the axial thrust force and transfers the axial thrust force to the rack shaft.

The ball screw device disclosed in JP 2015-132308 A is a deflector-type ball screw device. The ball screw device includes the rack shaft having an outer circumferential surface provided with a helical ball screw groove and a nut having an inner circumferential surface provided with a helical ball screw groove. The ball screw grooves of the rack shaft and the nut face each other to form a rolling path therebetween where balls are rollable.

The nut has two mounting holes extending therethrough between the outer circumferential surface and the screw groove on the inner circumferential surface of the nut. One deflector is mounted in each of the mounting holes. A circulation path that connects two points of the rolling path is formed by a recess portion formed as a ball path in the outer circumferential surface of the nut and through-hole paths formed in the deflectors. Each of the through-hole paths has a first end with an opening connected to the corresponding end of the recess portion and a second end with an opening connected to the corresponding point of the rolling path. The circulation path enables the balls to circulate endlessly through the rolling path.

According to JP 2015-132308 A, to mount the deflector in the mounting hole, the deflector is press-fitted into the mounting hole by pressing the deflector in a direction parallel to a reference line. The reference line is perpendicular to the axis of the nut and passes through the center of the opening in the first end of the circulation path (the through-hole path) in the deflector. Specifically, when the deflector is fixed in the mounting hole, press-fitted surfaces of the deflector that are parallel to the reference line and that face away from each other are partially press-fitted with press-fit surfaces of the mounting hole that are parallel to the reference line and that face toward each other.

According to JP 2015-132308 A, the shape and position of the entrance portion of the circulation path in the deflector with respect to the position of the opening in the first end are optimized so that the balls in the rolling path are smoothly introduced into the circulation path (the through-hole path) in the deflector from the screw groove on the inner circumferential surface of the nut. As a result, the tip portion of the deflector has a very small angle (a sharp angle) between the inner surface of the entrance portion of the circulation path and the outer surface of the entrance portion of the circulation path that has a shape substantially determined by the direction (parallel to the reference line) that the deflector is pressed in. Such a sharp angle makes it difficult to machine the entrance portion of the deflector. Further, to carry and store the deflector after the tip portion is machined, a jig or other device may be needed to protect the sharp-angled tip portion. Further, it is necessary to carefully handle the deflector, when mounting the deflector, so that the sharp-angled tip portion does not get deformed by hitting something. These factors may possibly increase the cost of the deflector and increase the cost of a ball screw device having the deflector accordingly.

### SUMMARY OF THE INVENTION

A purpose of the invention is to provide a low-cost ball screw device having a low-cost deflector, a method of manufacturing the ball screw device, and a steering system having the ball screw device, wherein the deflector is formable by simple machining, is easy to handle after being machined, and thus is easy to store and mount to another component.

An aspect of the invention provides a ball screw device including the following: a screw shaft having an outer circumferential surface provided with a helical outer rolling groove; a nut that has a tubular shape, that has an inner circumferential surface provided with a helical inner rolling groove, and that has two mounting holes each extending therethrough between the inner circumferential surface and an outer circumferential surface thereof; rolling elements rollably arranged in a rolling path defined between the outer rolling groove and the inner rolling groove; and a pair of deflectors that are each fixed in a corresponding one of the mounting holes and that connect predetermined two points of the rolling path to form a circulation path that enables the rolling elements to circulate endlessly through the rolling path.

The circulation path includes a first circulation path and second circulation paths. The first circulation path is located at the nut and connects the two mounting hole. Each of the second circulation paths is located in a corresponding one of the pair of deflectors, has a first end with an opening connected to a corresponding end of the first circulation path, and has a second end with an opening connected to the rolling path. Each of the mounting holes has a pair of circumferentially facing surfaces that face toward each other in a circumferential direction of the nut and that are parallel to each other. When a plane passing through both the center point of the opening in the first end of the second circulation path in each of the pair of deflectors and the axis of the nut is defined as a reference plane, an intersection line between a perpendicular plane perpendicular to the axis and the pair of circumferentially facing surfaces has an angle with respect to the reference plane.

According to this aspect, the intersection line between the perpendicular plane perpendicular to the axis and the pair of circumferentially facing surfaces of the mounting hole has an angle with respect to the reference plane. Thus, compared to the related art, the outer surface of a tip portion of the deflector forms a large angle with the inner surface of an entrance portion of the second circulation path that is optimally shaped to smoothly introduce the rolling elements in the rolling path into the circulation path in the deflector when the deflector is press-fitted in the mounting hole along the pair of circumferentially facing surfaces. Since the angle of the tip portion formed between the inner surface of the entrance portion of the circulation path and the outer surface of the tip portion is greater than that of the related art, the tip portion is easy to machine. Further, this eliminates the need to use a jig that protects the machined tip portion when the deflector is stored and carried. This also eliminates the necessity of mounting the deflector with extreme care so that the tip portion does not get deformed. Thus, this makes it possible to manufacture the deflector at a low cost compared to the related art and to reduce the cost of a ball screw device accordingly.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram illustrating an electric power steering system according to an embodiment of the invention;
FIG. 2 is an enlarged cross-sectional view illustrating a steering assist mechanism and a ball screw mechanism of the electric power steering system in FIG. 1;
FIG. 3 is a diagram illustrating the outside shape of a ball nut with a deflector attached;
FIG. 4 is a cross-sectional view taken along line IV-IV in FIG. 3;
FIG. 5 is a cross-sectional view taken along line V-V in FIG. 4 and illustrating an outer peripheral portion of the deflector;
FIG. 6 is a cross-sectional view taken along line VI-VI in FIG. 4 and illustrating an inner peripheral portion of the deflector;
FIG. 7 is a cross-sectional view taken along line VII-VII in FIG. 3 and illustrating the ball nut without the deflector;
FIG. 8 is a cross-sectional view taken along line VIII-VIII in FIG. 7; and
FIG. 9 is a diagram illustrating a first modification.

### DETAILED DESCRIPTION OF EMBODIMENTS

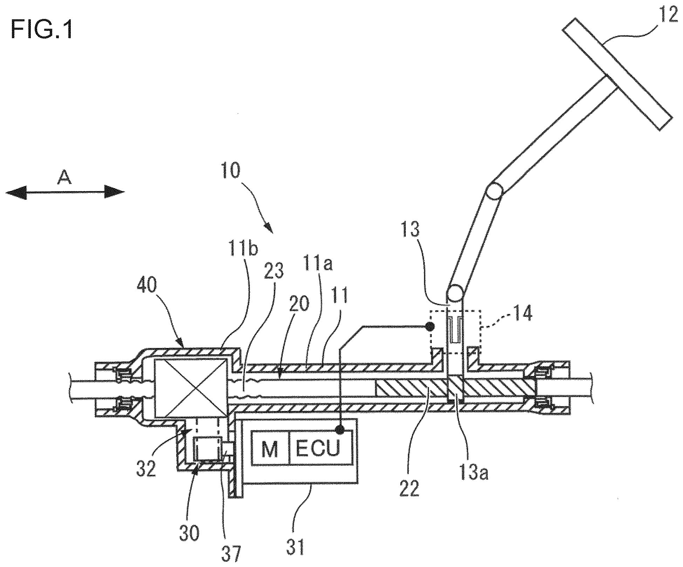

An embodiment of the invention is described below with reference to the drawings. FIG. 1 is an overall view of a vehicle electric power steering system (corresponding to a steering system) having a ball screw device according to the embodiment.

The electric power steering system provides a steering assist force that supplements a steering force. The ball screw device can be used not only for an electric power steering system, but also for any other system that uses a ball screw device. For example, the ball screw device may be used for a four-wheel steering system, a rear-wheel steering system, and a steer-by-wire system.

The structure of the steering system 10 is described. The electric power steering system 10 (hereinafter referred to as "steering system 10") causes a steered shaft 20 coupled to right and left steered wheels (not illustrated) of a vehicle to reciprocate in a direction A (a right-left direction in FIG. 1) parallel to the direction of the axis of the steered shaft 20, thereby steering the steered wheels.

As illustrated in FIG. 1, the steering system 10 includes a housing 11, a steering wheel 12, a steering shaft 13, a torque detector 14, an electric motor M (hereinafter referred to as "motor M"), the steered shaft 20, a steering assist mechanism 30, and the ball screw device 40.

The housing 11 is a fixable member to be fixed to a vehicle. The housing 11 has a tubular shape. The steered shaft 20 (corresponding to a screw shaft) is inserted through the housing 11 and is movable relative to the housing 11 in the direction A. The housing 11 includes a first housing 11a and a second housing 11b fixed to an end (a left end in FIG. 1) of the first housing 11a in the direction A.

The steering wheel 12 is fixed to a first end of the steering shaft 13 and is turnably supported in the interior of a vehicle. The steering shaft 13 transfers, to the steered shaft 20, a torque exerted on the steering wheel 12 by a driver who operates the steering wheel 12.

A second end of the steering shaft 13 toward the steered shaft 20 has a pinion 13a that is part of a rack-and-pinion mechanism. The torque detector 14 detects the torque exerted on the steering shaft 13 on the basis of the amount of torsion of the steering shaft 13.

The steered shaft 20 extends in the direction A. The steered shaft 20 has a rack 22. The rack 22 meshes with the pinion 13a of the steering shaft 13, thus serving as the rack-and-pinion mechanism in conjunction with the pinion 13a. The maximum axial force that the rack-and-pinion mechanism is allowed to transfer between the steering shaft 13 and the steered shaft 20 is set according to, for example, the intended used of the steering system 10.

The steered shaft 20 has a ball screw portion 23 at a location different from where the rack 22 is located. The ball screw portion 23 serves as the ball screw device 40 in conjunction with a ball nut 21 and receives the steering assist force from the steering assist mechanism 30. The steered shaft 20 is coupled, via tie rods and knuckle arms (not illustrated), at one end to the right steered wheel (not illustrated) and at the other end to the left steered wheel (not illustrated). The steered wheels are steered in a right-left direction in accordance with the axial movement of the steered shaft 20 in the direction A.

The steering assist mechanism 30 is driven by the motor M and provides the steered shaft 20 with the steering assist force. The steering assist mechanism 30 includes the motor M, a control ECU for driving the motor M, and a driving force transfer mechanism 32. The motor M and the control ECU for driving the motor M are housed in a case 31 that is fixed to the first housing 11a of the housing 11. The control ECU determines the steering assist force on the basis of an output signal of the torque detector 14 and controls the output of the motor M.

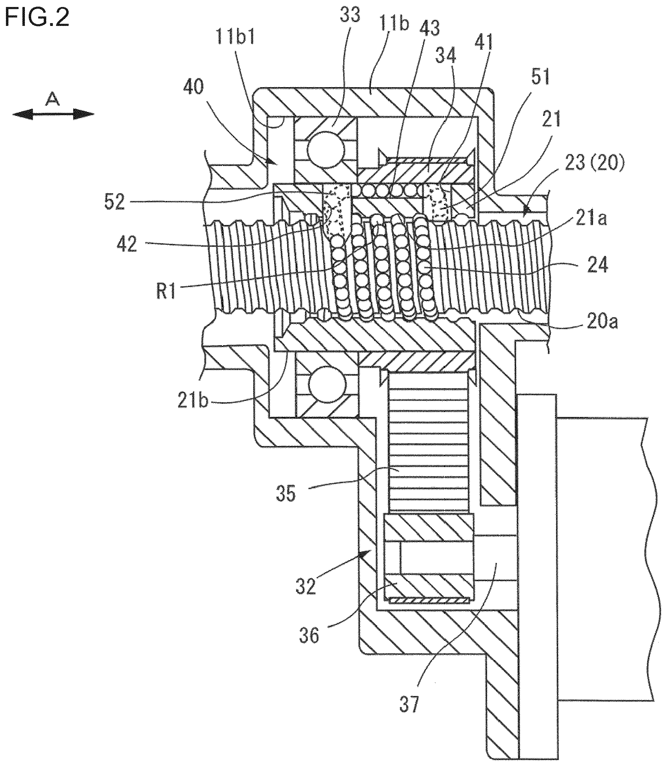

As illustrated in FIG. 2, the driving force transfer mechanism 32 includes a driven pulley 34, a toothed belt 35, and a driving pulley 36. The driving pulley 36 is coupled to an output shaft 37 of the motor M. The output shaft 37 is aligned parallel to the axis of the steered shaft 20. The driven pulley 34 is located radially outside the ball nut 21 and is rotatable along with the ball nut 21. An end (the left end in FIG. 2) of the ball nut 21 in the direction A is rotatably supported by a ball bearing 33 on an inner circumferential surface 11b1 of the second housing 11b. The toothed belt 35 is wrapped around the driving pulley 36 and the driven pulley 34. The driving force transfer mechanism 32 transfers a rotational driving force generated by the motor M between the driving pulley 36 and the driven pulley 34 through the toothed belt 35.

Next, the structure of the ball screw device 40 is described. As illustrated in FIG. 2, a major part of the ball screw device 40 is housed in the second housing 11b. The ball screw device 40 includes the ball screw portion 23 of the steered shaft 20 (corresponding to a screw shaft), the ball nut 21 (corresponding to a nut), multiple rolling balls 24 (corresponding to rolling elements), and a pair of deflectors 51 and 52. The ball screw portion 23 of the steered shaft 20 has an outer circumferential surface provided with a helical outer rolling groove 20a. The outer rolling groove 20a has multiple turns along the outer circumferential surface of the ball screw portion 23.

The ball nut 21 has a tubular shape and is arranged concentrically with the ball screw portion 23 (the steered shaft 20) around the ball screw portion 23. The ball nut 21 has an inner circumferential surface provided with a helical inner rolling groove 21 a. The inner rolling groove 21a has multiple turns along the inner circumferential surface of the ball nut 21. The outer rolling groove 20a of the ball screw portion 23 faces the inner rolling groove 21a of the ball nut 21 so that a rolling path R1 where the rolling balls 24 roll is formed between the outer rolling groove 20a and the inner rolling groove 21a. The rolling balls 24 are arranged rollably in the rolling path R1. Thus, the outer rolling groove 20a of the ball screw portion 23 (the steered shaft 20) is threadedly engaged with the inner rolling groove 21a of the ball nut 21 through the rolling balls 24.

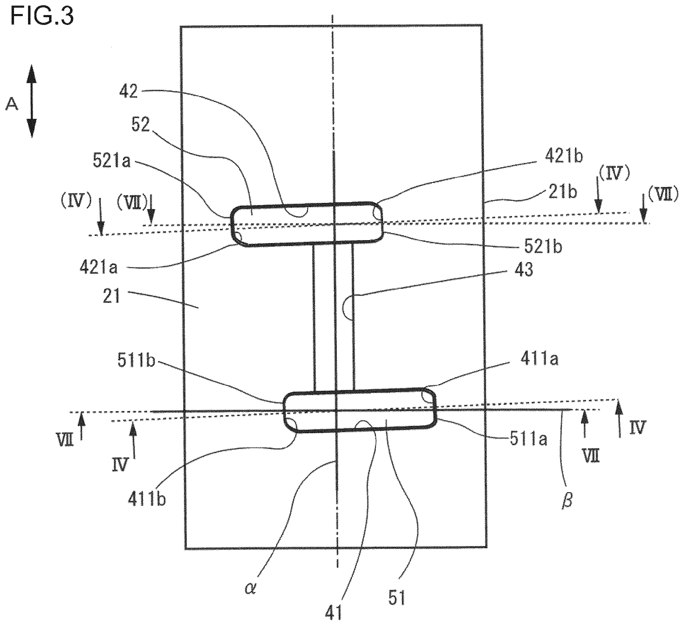

As illustrated in FIG. 2 and FIG. 3, the ball nut 21 has a pair of (i.e., two) mounting holes 41 and 42 each extending therethrough between the outer circumferential surface 21b and the inner circumferential surface of the ball nut 21. The detailed shapes of the mounting holes 41 and 42 are described later. The pair of mounting holes 41 and 42 are spaced from each other by a predetermined distance in the direction A. Thus, a predetermined number of turns of the inner rolling groove 21a are located between the pair of mounting holes 41 and 42.

The outer circumferential surface 21b of the ball nut 21 has a first circulation path 43 that connects the pair of mounting holes 41 and 42. The first circulation path 43 extends substantially in the direction of the axis of the ball nut 21 (i.e., in the direction A) and has an opening facing radially outward of the ball nut 21. The width of the opening of the first circulation path 43 is slightly greater than the diameter of the rolling balls 24. The bottom surface of the first circulation path 43 is a curved surface with a radius of curvature slightly greater than the radius of the rolling balls 24. This structure enables the rolling balls 24 to roll freely in the first circulation path 43 in a reciprocating manner.

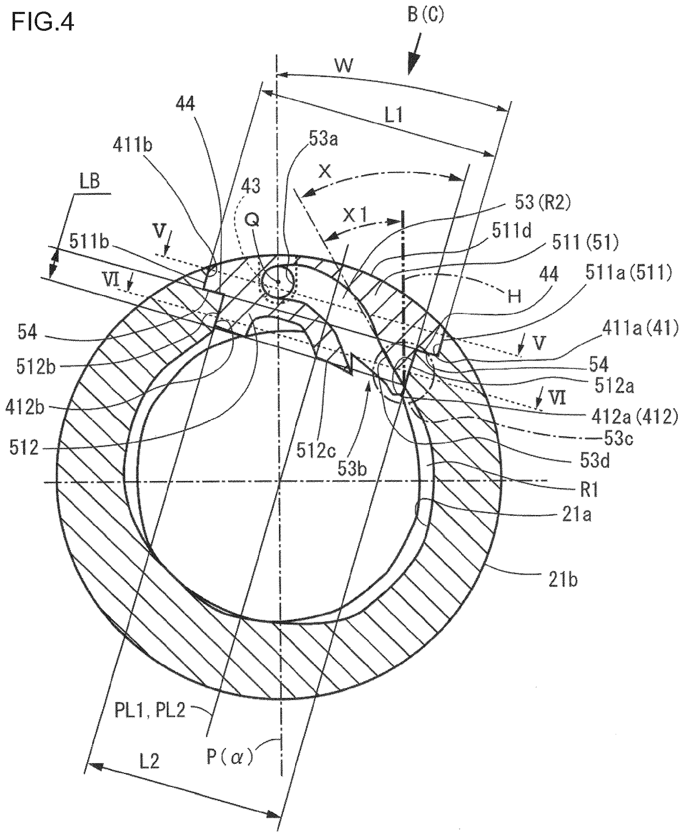

As illustrated in FIG. 2 and FIG. 4, the pair of deflectors 51 and 52 are fixed in the pair of mounting holes 41 and 42, respectively. The deflector 51 is inserted in the mounting hole 41 in a direction B. The deflector 52 is inserted in the mounting hole 42 in a direction C. The shape of the mounting hole 41 and the direction B viewed from one end of the ball nut 21 closer to the mounting hole 41 are respectively identical to the shape of the mounting hole 42 and the direction C viewed from the other end of the ball nut 21 closer to the mounting hole. In other words, when the mounting holes 41 and 42 and the directions B and C are viewed from one of the ends of the ball nut 21, the mounting holes 41 and 42 are line-symmetrically located, and the directions B and C are line-symmetrically directed.

Each of the deflectors 51 and 52 has a second circulation path 53 as a through hole extending therethrough. The second circulation path 53 has a first end with a first opening 53a and a second opening with a second opening 53b. When the deflector 51 is fixed in the mounting hole 41, the first opening 53a of the second circulation path 53 of the deflector 51 is connected to one end of the first circulation path 43. Likewise, when the deflector 52 is fixed in the mounting hole 42, the first opening 53a of the second circulation path 53 of the deflector 52 is connected to the other end of the first circulation path 43. Further, the second openings 53b of the second circulation paths 53 of the deflectors 51 and 52 are separately connected to predetermined two points of the rolling path R1 (refer to FIG. 4).

The pair of deflectors 51 and 52 pick up the rolling balls 24 from the rolling path R1 through the respective second openings 53b and guide the rolling balls 24 into the first circulation path 43 through the respective second circulation paths 53. Further, the pair of deflectors 51 and 52 discharge the rolling balls 24 in the first circulation path 43 into the rolling path R1 through the respective second circulation paths 53. The pair of deflectors 51 and 52 have the same shape and have the same function. The details of the pair of deflectors 51 and 52 and the mounting holes 41 and 42 that the deflectors 51 and 52 are inserted in are described later.

As already mentioned, the ball bearing 33 and the driven pulley 34 are mounted on the outer circumferential surface 21b of the ball nut 21. The ball bearing 33 and the driven pulley 34 cover the opening of the first circulation path 43 on the outer circumferential surface 21b of the ball nut 21 and also stop the deflectors 51 and 52 from coming off the mounting holes 41 and 42 respectively. The ball bearing 33 supports the ball nut 21 such that the ball nut 21 is rotatable relative to the second housing 11b (the housing 11).

A circulation path R2 that connects the predetermined two points of the rolling path R1 is defined by the second circulation paths 53 of the pair of deflectors 51 and 52 and a space enclosed by the inside wall surface of the first circulation path 43 of the ball nut 21 and the inside wall surface of the driven pulley 34. The circulation path R2 enables the rolling balls 24 (rolling elements) to circulate endlessly between the predetermined two points of the rolling path R1.

Next, the structure of the pair of deflectors 51 and 52 is described in detail with reference to FIGS. 3 to 6. Since the pair of deflectors 51 and 52 have the same structure, only the structure of the deflector 51 is described below for the sake of brevity. FIG. 3 and FIG. 4 are respectively a plan view and a cross-sectional view illustrating the deflector 51 mounted in the mounting hole 41 of the ball nut 21. The direction B indicated by an arrow in FIG. 4 represents a direction (hereinafter referred to as an insertion direction B) that the deflector 51 is inserted in.

As illustrated in FIG. 4, the deflector 51 has an outer peripheral portion 511 and an inner peripheral portion 512. When the deflector 51 is mounted in the mounting hole 41, the outer peripheral portion 511 is located closer to the outer periphery of the ball nut 21. With the deflector 51 mounted in the mounting hole 41, the inner peripheral portion 512 is located closer to the inner rolling groove 21a than the outer peripheral portion 511.

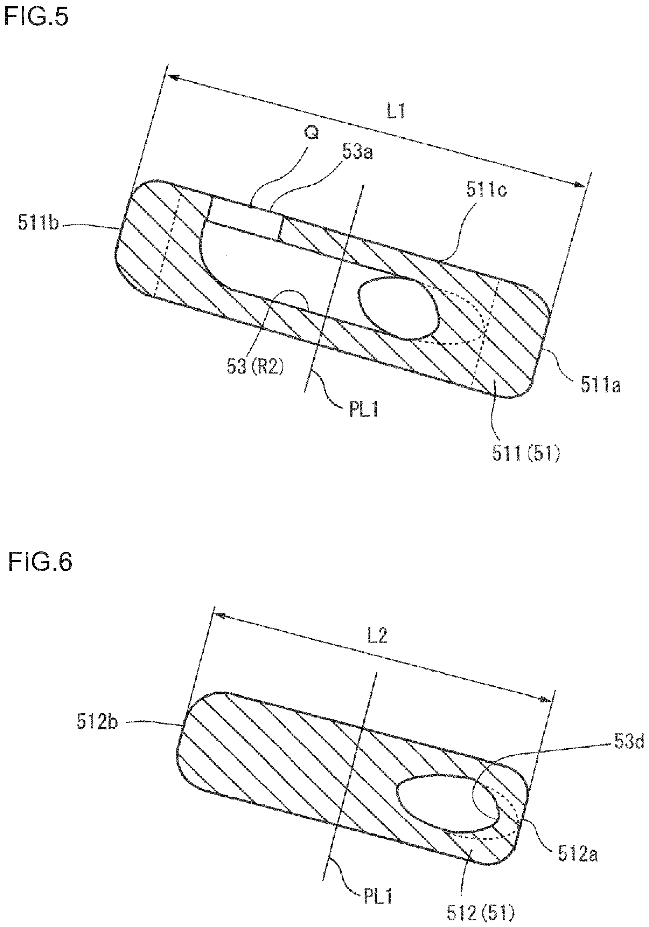

The outer peripheral portion 511 has a substantially rectangular shape with rounded corners in cross section perpendicular to the insertion direction B (refer to FIG. 5). The outer peripheral portion 511 has a pair of press-fitted surfaces 511a and 511b (corresponding to a pair of frictionally engaged surfaces) at opposite ends in the longitudinal direction of the substantially rectangular cross sectional shape. It is noted that the deflector 52 has a pair of press-fitted surfaces 521a and 521b equivalent to the pair of press-fitted surfaces 511a and 511b (refer to FIG. 3). The pair of press-fitted surfaces 511a and 511b face away from each other and are parallel to each other. The outer shape of the outer peripheral portion 511 is symmetric with respect to a bisecting plane PL1 that bisects a distance L1 between the pair of press-fitted surfaces 511a and 511b.

When the deflector 51 is inserted into the mounting hole 41 in the insertion direction B, the inner peripheral portion 512 work in cooperation with a later-described guide hole 412 of the mounting hole 41 to guide the deflector 51 in the insertion direction B since before a press-fit of the outer peripheral portion 511 into a later-described press-fit hole 411 of the mounting hole 41 starts until the press-fit finishes.

Like the outer peripheral portion 511, the inner peripheral portion 512 has a substantially rectangular shape with rounded corners in cross section perpendicular to the insertion direction B (refer to FIG. 6). The inner peripheral portion 512 has a pair of guided surfaces 512a and 512b at opposite ends in the longitudinal direction of the substantially rectangular cross sectional shape. An extending length of the pair of guided surfaces 512a and 512b in the insertion direction B of the deflector 51 is defined here as a second length LB (refer to FIG. 4).

The pair of guided surfaces 512a and 512b face away from each other and are parallel to each other. Further, according to the embodiment, the pair of press-fitted surfaces 511a and 511b are parallel to the pair of guided surfaces 512a and 512b. The contour shape of the inner peripheral portion 512 illustrated in FIG. 6 is symmetric with respect to the bisecting plane PL1 that bisects a distance L2 between the pair of guided surfaces 512a and 512b. The distance L2 between the pair of guided surfaces 512a and 512b is less than the distance L1 between the pair of press-fitted surfaces 511a and 511b (i.e., L1 > L2).

As illustrated in FIG. 4, the pair of press-fitted surfaces 511a and 511b of the outer peripheral portion 511 are respectively connected to the pair of guided surfaces 512a and 512b of the inner peripheral portion 512 through a pair of stopped surfaces 54. According to the embodiment, the pair of stopped surfaces 54 are perpendicular to the insertion direction B of the deflector 51 and face toward the inner rolling groove 21 a. The pair of stopped surfaces 54 abut against later-described stopping surfaces 44 of the mounting hole 41 when the deflector 51 is press-fitted into the mounting hole 41 by being pressed in the insertion direction B, thus restricting the position of the deflector 51 in the insertion direction B.

With the deflector 51 fixed in the mounting hole 41, an inner surface 512c of the inner peripheral portion 512 is located toward the inner rolling groove 21a and faces the ball screw portion 23 of the steered shaft 20. At this time, an outer surface 511 d of the outer peripheral portion 511 is located opposite the inner surface 512c in the insertion direction B and is exposed substantially flush with the outer circumferential surface 21b of the ball nut 21.

As already described, the deflector 51 has the second circulation path 53 extending therethrough. As illustrated in FIG. 5, the second circulation path 53 extends in a curve through the deflector 51 from the first end on a side surface 511c of the outer peripheral portion 511 of the deflector 51 in the circumferential direction to the second end on the inner surface 512c of the inner peripheral portion 512 in the longitudinal direction. In other words, the second circulation path 53 has the first opening 53a (the first end) in the side surface 511c of the outer peripheral portion 511 and has the second opening 53b (the second end) in the inner surface 512c of the inner peripheral portion 512.

Thus, when the deflector 51 is mounted (fixed) in the mounting hole 41, the first opening 53a (the first end) of the second circulation path 53 is connected to the end of the first circulation path 43 of the ball nut 21. Further, the second opening 53b (the second end) is connected to the rolling path R1 so that the second circulation path 53 forms part of the circulation path R2. The center of the first opening 53a is defined herein as a center point Q (refer to FIG. 4 and FIG. 5). The center point Q is used later to describe the embodiment.

It is noted that the inside shape of the second circulation path 53 and the relative position between the first opening 53a (the first end) and the second opening 53b (the second end) of the second circulation path 53 are predetermined in such a manner as to enable the second circulation path 53 to smoothly pick up the rolling balls 24 rolling in the rolling path R1 from the rolling path R1 and to smoothly feed the picked-up rolling balls 24 to the first circulation path 43. According to the embodiment, the inside shape of the second circulation path 53 and the relative position between the first opening 53a (the first end) and the second opening 53b (the second end) of the second circulation path 53 are set in the same manner as those in the related art, as illustrated in the cross sectional view of FIG. 4.

Next, the structure of the pair of mounting holes 41 and 42 of the ball nut 21 is described below with reference to FIG. 4, FIG. 7, and FIG. 8. As already described, the pair of mounting holes 41 and 42 extend through the ball nut 21 between the outer circumferential surface 21b and the inner circumferential surface. Since the pair of mounting holes 41 and 42 have the same structure, only the structure of the mounting hole 41 is described below for the sake of brevity.

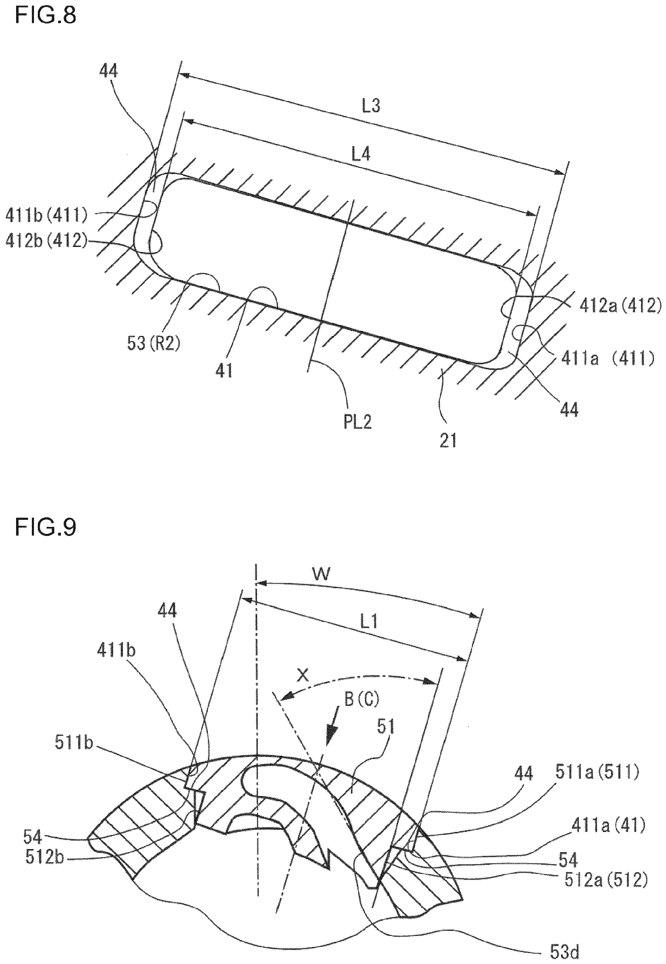

As illustrated in FIG. 4 and FIG. 8, the mounting hole 41 includes the press-fit hole 411, the guide hole 412, and the pair of stopping surfaces 44. The outer peripheral portion 511 of the deflector 51 is press-fitted in the press-fit hole 411. The inner peripheral portion 512 of the deflector 51 is fitted in the guide hole 412. The pair of stopping surfaces 44 abut against the pair of stopped surfaces 54 of the deflector 51, thus positioning the deflector 51 in the insertion direction B.

In the mounting hole 41, the press-fit hole 411 is located toward the outer circumferential surface 21b of the ball nut 21. The press-fit hole 411 has a shape similar to the outer shape of the outer peripheral portion 511 of the deflector 51 in cross section perpendicular to the insertion direction B (refer to FIG. 8). Thus, the shape of the press-fit hole 411 in cross section perpendicular to the insertion direction B of the deflector 51 is a substantially rectangle with rounded corners.

It is not always necessary that the longitudinal direction of the substantially rectangular cross sectional shape of the press-fit hole 411 be parallel to the end surfaces of the ball nut 21. According to the embodiment, the longitudinal direction of the press-fit hole 411 is substantially parallel to a direction that a projected groove extends. The projected groove is an imaginary groove that is formed by radially expanding the inner rolling groove 21a and then projecting the radially expanded inner rolling groove 21a onto the outer circumferential surface 21b.

The press-fit hole 411 has a pair of press-fit surfaces 411a and 411b (corresponding to a pair of frictionally engaging surfaces and a pair of circumferentially facing surfaces) at opposite ends in the longitudinal direction of the substantially rectangular shape. It is noted that the mounting hole 42 has a pair of press-fit surfaces 421a and 421b equivalent to the pair of press-fit surfaces 411a and 411b (refer to FIG. 3). The pair of press-fit surfaces 411a and 411b face toward each other in the circumferential direction along the outer circumferential surface 21b of the ball nut 21 and are parallel to each other. The press-fit hole 411 is symmetric with respect to a bisecting plane PL2 that bisects a distance L3 between the pair of press-fit surfaces 411a and 411b. The bisecting plane PL2 intersects with the axis of the ball nut 21 within an area of the mounting hole 41 in the direction of the axis of the ball nut 21.

When the outer peripheral portion 511 of the deflector 51 is fitted in the mounting hole 41, the pair of press-fitted surfaces 511 a and 511b of the deflector 51 are interferingly engaged (press-fitted) with the pair of press-fit surfaces 411a and 411b of the press-fit hole 411. Thus, the pair of press-fitted surfaces 511 a and 511b of the deflector 51 are frictionally engaged (press-fitted) with the pair of press-fit surfaces 411a and 411b of the mounting hole 41. With the deflector 51 fixed to the mounting hole 41, the bisecting plane PL2 is the same plane as the bisecting plane PL1 used to describe the deflector 51.

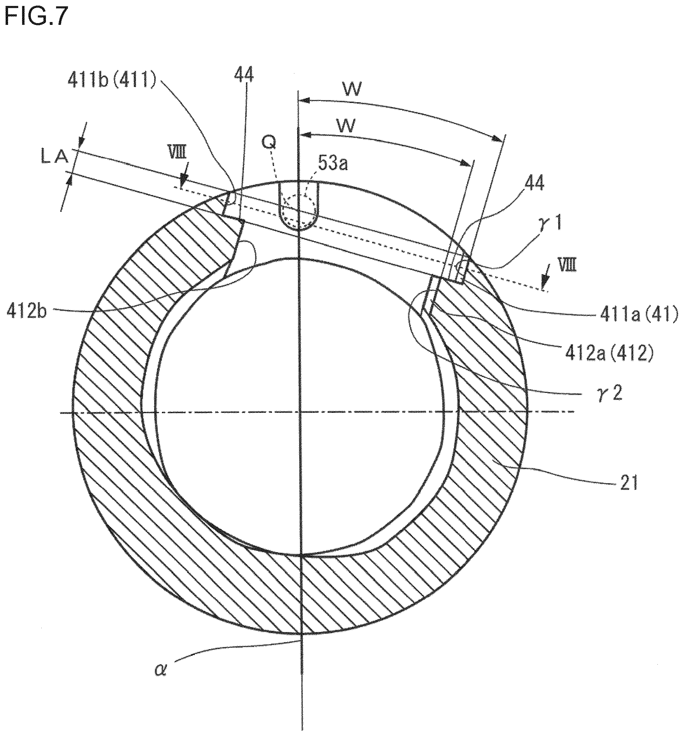

Next, how to set the angle (the position) of the pair of press-fit surfaces 411a and 411b is described. The angle (the position) of the pair of press-fit surfaces 411a and 411b is set with reference to the center point Q of the first opening 53a (the first end) of the second circulation path 53, illustrated in FIG. 4 and FIG. 7. Specifically, as illustrated in FIG. 7, a plane passing through both the center point Q of the first opening 53a and the axis of the ball nut 21 (a nut) is defined as a reference plane α.

Further, an imaginary intersection line between an imaginary perpendicular plane β (corresponding to a perpendicular plane, refer to FIG. 3) perpendicular to the axis of the ball nut 21 and any position on the pair of press-fit surfaces 411a and 411b is defined as an intersection line γ1 (FIG. 7 omits illustration of the intersection line γ1 on the press-fit surface 411b). The pair of press-fit surfaces 411 a and 411b are formed such that the intersection line γ1 and the reference plane α form an angle W greater than an angle (i.e., zero degrees) that is formed when the intersection line γ1 is parallel to the reference plane α as in the related art. In short, the angle W is greater than zero degrees. The relative angle between the intersection line γ1 and the reference plane α is equal to the angle W between the press-fit surface 411a and a perpendicular line P drawn from the center point Q to the axis of the ball nut 21 (a nut), as illustrated in the cross-sectional view of FIG. 4.

According to the embodiment, the pair of press-fit surfaces 411a and 411b are formed such that the angle W between the intersection line γ1 and the reference plane α is, for example, substantially 15 degrees. The angle W is not limited to specific degrees. The angle W between the intersection line γ1 and the reference plane α can be any degree greater than zero degrees.

The pair of press-fit surfaces 411a and 411b have the same length in the insertion direction B, and this length is defined here as a first length LA. The first length LA is less than the second length LB of the pair of guided surfaces 512a and 512b of the deflector 51 (i.e., LA < LB).

Like the press-fit hole 411, the guide hole 412 has a shape similar to the outer shape (the contour shape) of the inner peripheral portion 512 of the deflector 51 in cross section perpendicular to the insertion direction B (refer to FIG. 8). Thus, the shape of the guide hole 412 in cross section perpendicular to the insertion direction B is a substantially rectangle with rounded corners. The guide hole 412 has a pair of guide surfaces 412a and 412b (corresponding to a pair of circumferentially facing surfaces) that are located at opposite ends in the longitudinal direction to guide the insertion of the deflector 51.

The pair of guide surfaces 412a and 412b face toward each other and are parallel to each other. Further, the pair of guide surfaces 412a and 412b are parallel to the pair of press-fit surfaces 411a and 411b of the press-fit hole 411. As in the case of the pair of press-fit surfaces 411a and 411b, when an imaginary intersection line between the imaginary perpendicular plane β (corresponding to a perpendicular plane) perpendicular to the axis of the ball nut 21 and the pair of guide surfaces 412a and 412b is defined as an intersection line γ2 (FIG. 7 omits illustration of the intersection line γ2 on the guide surface 412b), the pair of guide surfaces 412a and 412b are formed such that the intersection lines γ1 and γ2 have the same angle W with respect to the reference plane α. The angle W between the intersection line γ2 and the reference plane α illustrated in FIG. 7 is equal to an angle between the guide surface 412a and the perpendicular line P drawn from the center point Q to the axis of the ball nut 21 (a nut), as illustrated in the cross-sectional view of FIG. 4.

The guide hole 412 is symmetric with respect to the bisecting plane PL2 that bisects a distance L4 between the pair of guide surfaces 412a and 412b. The distance L4 between the pair of guide surfaces 412a and 412b is less than the distance L3 between the pair of press-fit surfaces 411a and 411b (i.e., L4 < L3). The bisecting plane PL2 passes through (intersects with) the axis of the ball nut 21 within an area of the mounting hole 41 in the direction of the axis of the ball nut 21.

With the deflector 51 fixed in the mounting hole 41 and 42, the pair of stopping surfaces 44 face and abut against the pair of stopped surfaces 54 of the deflector 51, thus positioning the deflector 51 in the insertion direction B. The pair of stopping surfaces 44 is located closer to the inner rolling groove 21 a of the ball nut 21 (a nut) than the pair of press-fit surfaces 411a and 411b (a pair of frictionally engaging surfaces). The pair of stopping surfaces 44 are perpendicular to the pair of press-fit surfaces 411a and 411b (a pair of frictionally engaging surfaces) and are located on the same plane.

According to the embodiment, as already described, the inside shape of the second circulation path 53 and the relative position between the first opening 53a (the first end) and the second opening 53b (the second end) of the second circulation path 53 are the same as those in the related art (e.g., JP 2015-132308 A). Under this condition, according to the embodiment, as already described, the pair of press-fit surfaces 411a and 411b are formed such that the intersection line γ1 and the reference plane α form an angle (e.g., substantially 15 degrees) greater than that formed when the intersection line γ1 and the reference plane α are parallel to each other. Further, the pair of guide surfaces 412a and 412b are parallel to the pair of press-fit surfaces 411a and 411b. As such, the pair of guide surfaces 412a and 412b are formed such that the intersection line γ2 and the reference plane α form an angle (e.g., substantially 15 degrees) greater than that formed when the intersection line γ2 is parallel to the reference plane α.

Thus, as illustrated in FIG. 4, at a tip portion 53c of the inner peripheral portion 512 including the second opening 53b (the second end) connected to the rolling path R1, an inner surface 53d of the second circulation path 53 and the guided surface 512a form a tip angle X that is greater than that of the related art by the amount of inclination of the press-fit surface 411a and the guide surface 412a with respect to the reference plane α. Accordingly, the tip portion 53c has a large thickness and a high strength, compared to that of the related art. A bold, long dashed double-short dashed line H in FIG. 4 represents the position of a guided surface of the related art as a comparative example. The tip portion of the related art has a tip angle X1.

Next, a method of manufacturing the ball screw device 40 is described with a focus on how the deflector 51 is mounted in the mounting hole 41 of the ball nut 21. To mount the deflector 51 in the mounting hole 41, the deflector 51 is inserted into the press-fit hole 411 of the mounting hole 41 illustrated in FIG. 7 and FIG. 8 in the insertion direction B with the tip end of the inner peripheral portion 512 first.

At this time, the insertion direction B is parallel to the pair of press-fit surfaces 411a and 411b, and the angle of the pair of press-fit surfaces 411a and 411b with respect to the reference plane α is set as described above. Further, the second length LB of the pair of guided surfaces 512a and 512b of the inner peripheral portion 512 is greater than the first length LA of the pair of press-fit surfaces 411 a and 411b (i.e., LA < LB).

Therefore, the tip ends of the pair of guided surfaces 512a and 512b of the inner peripheral portion 512 move in the insertion direction B and pass the pair of press-fit surfaces 411a and 411b having the first length LA while facing the pair of press-fit surfaces 411a and 411b. After passing the pair of press-fit surfaces 411a and 411b in the insertion direction B, the tip ends of the pair of guided surfaces 512a and 512b are engaged with the pair of guide surfaces 412a and 412b. This engagement causes the deflector 51 to be tilted in the same angle as the insertion direction B.

Then, when the deflector 51 is moved forward by a predetermined distance in the insertion direction B with the pair of guided surfaces 512a and 512b of the inner peripheral portion 512 guided by the pair of guide surfaces 412a and 412b, the pair of press-fitted surfaces 511a and 511b of the outer peripheral portion 511 of the deflector 51 start being press-fitted with the pair of press-fit surfaces 411a and 411b of the mounting hole 41. During this press-fit process of forming a press fit between the pair of press-fitted surfaces 511 a and 511b of the outer peripheral portion 511 of the deflector 51 and the pair of press-fit surfaces 411a and 411b of the mounting hole 41, the pair of guided surfaces 512a and 512b of the inner peripheral portion 512 are guided by the pair of guide surfaces 412a and 412b of the mounting hole 41. The press-fit process is continued until the pair of stopped surfaces 54 of the deflector 51 abut against the pair of stopping surfaces 44 of the mounting hole 41, so that the deflector 51 is fixed in the mounting hole 41.

The embodiment has effects described below. According to the embodiment, the ball screw device 40 includes the following: the steered shaft 20 (a screw shaft) having the outer circumferential surface provided with the helical outer rolling groove 20a; the ball nut 21 (a nut) that has a tubular shape, that has the inner circumferential surface provided with the helical inner rolling groove 21a, and that has two mounting holes 41 and 42 each extending therethrough between the inner circumferential surface and the outer circumferential surface 21b; the rolling balls 24 (rolling elements) rollably arranged in the rolling path R1 defined between the outer rolling groove 20a and the inner rolling groove 21 a; and the pair of deflectors 51 and 52 that are each fixed in a corresponding one of the two mounting holes 41 and 42 and that connect the predetermined two points of the rolling path R1 to form the circulation path R2 that enables the rolling balls 24 to circulate endlessly through the rolling path R1.

The circulation path R2 includes the first circulation path 43 and the second circulation paths 53. The first circulation path 43 is located at the ball nut 21 and connects the two mounting holes 41 and 42. Each of the second circulation paths 53 is located in the corresponding one of the pair of deflectors 51 and 52, has the first end with the opening connected to the corresponding end of the first circulation path 43, and has the second end with the opening connected to the rolling path R1.

Each of the mounting holes 41 and 42 has the pair of circumferentially facing surfaces (at least one pair of the pair of press-fit surfaces 411a and 411b and the pair of guide surfaces 412a and 412b) that face toward each other in the circumferential direction of the ball nut 21 and that are parallel to each other. When the plane passing through both the center point Q of the opening (the first opening 53a) in the first end of the second circulation path 53 in each of the pair of deflectors 51 and 52 and the axis of the ball nut 21 is defined as the reference plane α, the intersection line (at least one of the intersection lines γ1 and γ2) between the imaginary perpendicular plane β perpendicular to the axis and the pair of circumferentially facing surfaces has an angle with respect to the reference plane α.

As such, the pair of circumferentially facing surfaces (at least one pair of the pair of press-fit surfaces 411a and 411b and the pair of guide surfaces 412a and 412b) are formed such that the reference plane α and at least one of the intersection lines γ1 and γ2 forms an angle (e.g., substantially 30 degrees) greater than that formed when the at least one of the intersection lines γ1 and γ2 is parallel to the reference plane α. This structures allows the pair of circumferentially facing surfaces to have a large angle with respect to the perpendicular line P in the cross-sectional view of FIG. 4. Thus, when the inside shape of the second circulation path 53 and the relative position between the first opening 53a (the first end) and the second opening 53b (the second end) of the second circulation path 53 are the same as those in the related art, the tip angle X of the tip portion 53c of the deflector 51 becomes greater than that of the related art by the degree of the angle that the at least one of the intersection lines γ1 and γ2 has with respect to the reference plane α. Accordingly, the tip portion 53c has a high strength, compared to that of the related art. Further, this eliminates the need to use a jig that protects the machined tip portion when the deflector is stored and carried. This also eliminates the necessity of mounting the deflector with extreme care so that the tip portion does not get deformed. Thus, this makes it possible to manufacture the deflector at a low cost compared to the related art and to reduce the cost of a ball screw device accordingly.

Further, according to the embodiment, the pair of circumferentially facing surfaces of the mounting hole 41 include the pair of press-fit surfaces 411a and 411b (a pair of frictionally engaging surfaces) that are interferingly fixed to the deflector 51. The intersection line γ1 between the imaginary perpendicular plane β (a perpendicular plane) perpendicular to the axis and the pair of press-fit surfaces 411a and 411b (a pair of frictionally engaging surfaces) has the angle W with respect to the reference plane α.

Thus, in the cross-sectional view of FIG. 4, the perpendicular line P and the pair of press-fit surfaces 411a and 411b (a pair of frictionally engaging surfaces) form an angle greater than that formed when the pair of press-fit surfaces 411a and 411b are parallel to the perpendicular line P. This allows the tip portion 53c of the deflector 51 that is located closer to the inner periphery of the ball nut 21 than the pair of press-fit surfaces 411a and 411b to have the tip angle X greater than that of the deflector of the related art. Accordingly, the tip portion 53c has a high strength, compared to the related art, so that the effects described in the embodiment are achieved.

Further, according to the embodiment, the pair of circumferentially facing surfaces of the mounting hole 41 include the pair of guide surfaces 412a and 412b for guiding the insertion of the deflector 51, and the intersection line γ2 between the imaginary perpendicular plane β (a perpendicular plane) perpendicular to the axis and the pair of guide surfaces 412a and 412b has the angle W with respect to the reference plane α (refer to FIG. 7). Thus, in the cross-sectional view of FIG. 4, the perpendicular line P and the pair of guide surfaces 412a and 412b (a pair of circumferentially facing surfaces) form an angle greater than that formed when the pair of guide surfaces 412a and 412b are parallel to the perpendicular line P. In this case, out of the pair of guide surfaces 412a and 412b, the guide surface 412b directly defines the tip portion 53c of the deflector 51. This ensures that the tip angle X of the tip portion 53c is greater than that of the tip portion of the deflector of the related art. Accordingly, the tip portion 53c has a high strength, compared to that of the related art, so that the effects described in the embodiment are achieved.

Further, according to the embodiment, the pair of circumferentially facing surfaces of the mounting hole 41 include the pair of press-fit surfaces 411a and 411b (a pair of frictionally engaging surfaces) and the pair of guide surfaces 412a and 412b. The pair of press-fit surfaces 411a and 411b are interferingly fixed to the deflector 51. The pair of guide surfaces 412a and 412b are located closer to the inner rolling groove 21a of the ball nut 21 (a nut) than the pair of press-fit surfaces 411a and 411b (a pair of frictionally engaging surfaces) and guide the insertion of the deflector 51. The intersection line γ1 between the imaginary perpendicular plane β (a perpendicular plane) perpendicular to the axis and the pair of press-fit surfaces 411a and 411b has an angle with respect to the reference plane α, and the intersection line γ2 between the imaginary perpendicular plane β (a perpendicular plane) perpendicular to the axis and the pair of guide surfaces 412a and 412b has an angle with respect to the reference plane α. As such, the tip portion 53c of the deflector 51 has the effects described above. Further, since the pair of guide surfaces 412a and 412b guide the pair of guided surfaces 512a and 512b of the deflector 51 when the deflector 51 is inserted and press-fitted into the mounting hole 41, the deflector 51 is fixed in correct position without being tilted relative to the mounting hole 41. This enables the rolling balls 24 to circulate smoothly in the ball screw device 40 through the deflector 51.

Further, according to the embodiment, the bisecting plane PL1 that bisects the distance L1 between the pair of press-fit surfaces 411a and 411b (a pair of frictionally engaging surfaces) passes through the axis of the ball nut 21 (a nut) within an area of the mounting hole 41 in the direction of the axis of the ball nut 21. This structure facilitates a balance between the pair of press-fitted surfaces 511a and 511b when the pair of press-fitted surfaces 511 a and 511b of the deflector 51 are press-fitted with the pair of press-fit surfaces 411a and 411b, thus facilitating press-fitting of the deflector 51.

Further, according to the embodiment, each of the mounting holes 41 and 42 has the pair of stopping surfaces 44 that position the corresponding one of the deflectors 51 and 52 in the insertion direction of the deflectors 51 and 52 when the deflectors 51 and 52 are respectively fixed in the mounting holes 41 and 42. The pair of stopping surfaces 44 are located closer to the inner rolling groove 21a of the ball nut 21 (a nut) than the pair of press-fit surfaces 411a and 411b (a pair of frictionally engaging surfaces) and are located on the same plane perpendicular to the pair of press-fit surfaces 411a and 411b.

Since the pair of stopping surfaces 44 are located on the same plane perpendicular to the pair of press-fit surfaces 411a and 411b, the pair of stopping surfaces 44 are formable simultaneously without a changeover of a cutting tool. This makes the pair of stopping surfaces 44 easy to machine and accurately shaped to be flush with each other. Thus, when the deflector 51 is fixed in the mounting hole 41, the pair of stopping surfaces 44 of the mounting hole 41 abut entirely and satisfactorily against the pair of stopped surfaces 54 of the deflector 51 so that the deflector 51 is fixed in the mounting hole 41 reliably.

Further, according to the embodiment, the deflector 51 includes the following: the pair of press-fitted surfaces 511a and 511b (a pair of frictionally engaged surfaces) that are engaged with the pair of press-fit surfaces 411a and 411b (a pair of frictionally engaging surfaces); and the pair of guided surfaces 512a and 512b that are located closer to the inner rolling groove 21 a of the ball nut 21 (a nut) than the pair of press-fitted surfaces 511 a and 511b and that are guided by the pair of guide surfaces 412a and 412b. The first length LA that is the length of the pair of press-fit surfaces 411a and 411b in the insertion direction B of the deflector 51 is less than the second length LB that is the length of the pair of guided surfaces 512a and 512b of the deflector 51 in the insertion direction of the deflector 51.

Thus, when the deflector 51 is inserted into the mounting hole 41, the tip portion of the pair of guided surfaces 512a and 512b having the second length LB passes the pair of press-fit surfaces 411a and 411b having the first length LA and are engaged with the pair of guide surfaces 412a and 412b. This engagement causes the deflector 51 to be tilted in the insertion direction B (i.e., causes the direction of tilt of the deflector 51 to coincide with the insertion direction B). After that, the pair of press-fitted surfaces 511 a and 511b of the outer peripheral portion 511 of the deflector 51 start being press-fitted with the pair of press-fit surfaces 411a and 411b of the mounting hole 41 while remaining parallel to the pair of press-fit surfaces 411a and 411b. Thus, the pair of press-fitted surfaces 511a and 511b are smoothly and satisfactorily press-fitted with the pair of press-fit surfaces 411a and 411 b.

Further, according to the embodiment, the circulation path R2 of the ball screw device 40 includes the first circulation path 43 and the second circulation paths 53. The first circulation path 43 is located at the ball nut 21 (a nut) and connects the two mounting holes 41 and 42. Each of the second circulation paths 53 is located in a corresponding one of the pair of deflectors 51 and 52, has the first end with the opening connected to the corresponding end of the first circulation path 43, and has the second end with the opening connected to the rolling path R1. The mounting hole 41 has the pair of circumferentially facing surfaces (at least one pair of the pair of press-fit surfaces 411a and 411b and the pair of guide surfaces 412a and 412b) that face toward each other in the circumferential direction of the ball nut 21 and that are parallel to each other. When the plane passing through both the center point Q of the opening in the first end of the second circulation path 53 in the deflector 51 and the axis of the ball nut 21 is defined as the reference plane α, the intersection line (γ1 and γ2) between the imaginary perpendicular plane β (a perpendicular plane) perpendicular to the axis and the pair of circumferentially facing surfaces (the pair of press-fit surfaces 411a and 411b and the pair of guide surfaces 412a and 412b) has an angle with respect to the reference plane α. The method of manufacturing the ball screw device 40 includes fixing the deflector 51 in the mounting hole 41 by inserting the deflector 51 in the direction that the intersection line extends in. Thus, the ball screw device 40 according to the embodiment is manufactured.

Further, according to the embodiment, the steering system 10 includes the ball screw device 40. Thus, the steering system 10 has the effects of the ball screw device 40.

Modifications of the embodiment are described below. According to the embodiment, the mounting hole 41 has the pair of press-fit surfaces 411 a and 411b and the pair of guide surfaces 412a and 412b. When the deflector 51 is inserted so that the pair of press-fitted surfaces 511 a and 511b of the deflector 51 are press-fitted with the pair of press-fit surfaces 411a and 411b, the pair of guide surfaces 412a and 412b guide the pair of guided surfaces 512a and 512b of the deflector 51.

The pair of press-fit surfaces 411a and 411b and the pair of guide surfaces 412a and 412b serve as the pair of circumferentially facing surfaces and have the respective intersection lines γ1 and γ2 that form an angle, with respect to the reference plane α, greater than that formed when the intersection lines γ1 and γ2 are parallel to the reference plane α. However, the mounting hole 41 is not limited to this structure.

In a first modification, as illustrated in FIG. 9, the pair of guide surfaces 412a and 412b may be angled relative to each other so as not to serve as the pair of circumferentially facing surfaces and may have no feature to guide the insertion of the deflector 51 into the mounting hole 41.

According to the embodiment, the mounting hole 41 has the pair of press-fit surfaces 411a and 411b, and the pair of press-fitted surfaces 511a and 511b of the deflector 51 are press-fitted with the pair of press-fit surfaces 411a and 411b. However, the fixing method is not limited to a press fit. In a second modification, a clearance fit between the pair of press-fit surfaces 411a and 411b and the pair of press-fitted surfaces 511a and 511b may be used.

In this case, the deflector 51 may be fixed in the mounting hole 41, for example, by swaging a portion of the mounting hole 41 near the outer circumferential surface 21b of the ball nut 21. Alternatively, the ball bearing 33 and the driven pulley 34 that are fixed on the outer circumferential surface 21b of the ball nut 21 may fix the deflector 51 in the mounting hole 41 while stopping the deflector 51 from coming off the mounting hole 41, thus eliminating the need to swage the portion of the mounting hole 41. Even such structures allow the tip angle X of the tip portion 53c of the deflector 51 to become sufficiently large.

Further, according to the embodiment, the bisecting plane PL1 that bisects the distance between the pair of press-fit surfaces 411a and 411b (a pair of frictionally engaging surfaces) passes through the axis of the ball nut 21 (a nut) within an area of the mounting hole 41 in the direction of the axis of the ball nut 21. However, the mounting hole 41 is not limited to this structure. In a third modification, the press-fit hole 411 of the mounting hole 41 may be asymmetric with respect to the bisecting plane PL1. Even such a structure has appropriate effects on the shape of the tip portion 53c of the deflector 51.

Further, according to the embodiment, the pair of stopping surfaces 44 are located closer to the inner rolling groove 21 a of the ball nut 21 (a nut) than the pair of press-fit surfaces 411a and 411b (a pair of frictionally engaging surfaces) and are located on the same plane perpendicular to the pair of press-fit surfaces 411 a and 411b. However, the pair of stopping surfaces 44 are not limited to this structure. In a fourth modification, the pair of stopping surfaces 44 may be on different planes. Even such a structure has the same effects as those described in the embodiment on the shape of the tip portion 53c of the deflector 51.

According to the embodiment, the first length LA of the pair of press-fit surfaces 411 a and 411b of the mounting hole 41 in the insertion direction B is less than the second length LB of the pair of guided surfaces 512a and 512b of the deflector 51 (i.e., LA < LB). The first length LA and the second length LB are not limited to this relationship. In a fifth embodiment, the first length LA may be equal to the second length LB. Alternatively, the second length LB may be less than the first length LA. Even such structures have the same effects as those described in the embodiment on the shape of the tip portion 53c of the deflector 51 although the deflector 51 may be tilted relative to the mounting hole 41 when being inserted and press-fitted into the mounting hole 41.

## Claims

1. A ball screw device comprising:
a screw shaft having an outer circumferential surface provided with a helical outer rolling groove;
a nut having a tubular shape and an inner circumferential surface provided with a helical inner rolling groove, the nut further having two mounting holes each extending therethrough between the inner circumferential surface and an outer circumferential surface thereof;
rolling elements rollably arranged in a rolling path defined between the outer rolling groove and the inner rolling groove;
a pair of deflectors each fixed in a corresponding one of the two mounting holes, the pair of deflectors connecting predetermined two points of the rolling path to form a circulation path that enables the rolling elements to circulate endlessly through the rolling path, wherein
the circulation path includes a first circulation path and second circulation paths,
the first circulation path is located at the nut and connects two mounting holes,
each of the second circulation paths is located in a corresponding one of the pair of deflectors, has a first end with an opening connected to a corresponding end of the first circulation path, and has a second end with an opening connected to the rolling path,
each of the mounting holes has a pair of circumferentially facing surfaces that face toward each other in a circumferential direction of the nut and that are parallel to each other, and
when a plane passing through a center point of the opening in the first end of the second circulation path in each of the pair of deflectors and an axis of the nut is defined as a reference plane, an intersection line between a perpendicular plane perpendicular to the axis and the pair of circumferentially facing surfaces has an angle with respect to the reference plane.

2. The ball screw device according to claim 1, wherein
the pair of circumferentially facing surfaces of each of the mounting holes includes a pair of frictionally engaging surfaces interferingly fixed to a corresponding one of the pair of deflectors, and
an intersection line between the perpendicular plane perpendicular to the axis and the pair of frictionally engaging surfaces has the angle with respect to the reference plane.

3. The ball screw device according to claim 1, wherein
the pair of circumferentially facing surfaces of each of the mounting holes includes a pair of guide surfaces that guide insertion of a corresponding one of the pair of deflectors, and
an intersection line between the perpendicular plane perpendicular to the axis and the pair of guide surfaces has the angle with respect to the reference plane.

4. The ball screw device according to claim 1, wherein
the pair of circumferentially facing surfaces of each of the mounting holes includes a pair of frictionally engaging surfaces interferingly fixed to a corresponding one of the pair of deflectors and a pair of guide surfaces that guide insertion of the corresponding one of the pair of deflectors, and
an intersection line between the perpendicular plane perpendicular to the axis and each of the pair of frictionally engaging surfaces and the pair of guide surfaces has the angle with respect to the reference plane.

5. The ball screw device according to claim 2 or 4, wherein
a bisecting plane bisecting a distance between the pair of frictionally engaging surfaces passes through the axis of the nut within an area of the mounting hole in a direction of the axis of the nut.

6. The ball screw device according to any one of claims 2, 4, and 5, wherein
each of the mounting holes includes a pair of stopping surfaces that position a corresponding one of the pair of deflectors in an insertion direction that the corresponding deflector is inserted in, and
the pair of stopping surfaces are located closer to the inner rolling groove of the nut than the pair of frictionally engaging surfaces and are located on a same plane perpendicular to the pair of frictionally engaging surfaces.

7. The ball screw device according to claim 4, wherein
each of the deflectors has a pair of frictionally engaged surfaces and a pair of guided surface,
the pair of frictionally engaged surfaces are engaged with the pair of frictionally engaging surfaces,
the pair of guided surfaces are located closer to the inner rolling groove of the nut than the pair of frictionally engaged surfaces and are guided by the pair of guide surfaces, and
a first length that is a length of the pair of frictionally engaging surfaces of each of the mounting holes in an insertion direction that a corresponding one of the deflectors is inserted in is less than a second length that is a length of the pair of guided surfaces of the corresponding deflector in the insertion direction.

8. A method of manufacturing a ball screw device including: a screw shaft having an outer circumferential surface provided with a helical outer rolling groove; a nut that has a tubular shape, that has an inner circumferential surface provided with a helical inner rolling groove, and that has two mounting holes each extending therethrough between the inner circumferential surface and an outer circumferential surface thereof; rolling elements rollably arranged in a rolling path defined between the outer rolling groove and the inner rolling groove; and a pair of deflectors that are each fixed in a corresponding one of the mounting holes and that connect predetermined two points of the rolling path to form a circulation path that enables the rolling elements to circulate endlessly through the rolling path, the method comprising:
mounting each of the pair of deflectors in the corresponding one of the mounting holes, wherein
the circulation path includes a first circulation path and second circulation paths,
the first circulation path is located at the nut and connects the two mounting holes,
each of the second circulation paths is located in a corresponding one of the pair of deflectors, has a first end with an opening connected to a corresponding end of the first circulation path, and has a second end with an opening connected to the rolling path,
each of the mounting holes has a pair of circumferentially facing surfaces that face toward each other in a circumferential direction of the nut and that are parallel to each other,
when a plane passing through both a center point of the opening in the first end of the second circulation path in each of the pair of deflectors and an axis of the nut is defined as a reference plane, an intersection line between a perpendicular plane perpendicular to the axis and the pair of circumferentially facing surfaces has an angle with respect to the reference plane, and
the mounting includes fixing each of the pair of deflectors in the corresponding one of the mounting holes by inserting each of the pair of deflectors in the corresponding one of the mounting holes in a direction that the intersection line extends in.

9. A steering system comprising:
the ball screw device of any one of claims 1 to 7.
